# DEMANDE DE BREVET EUROPEEN

(11) **EP 0 869 654 A1**
(43) Date de publication de la demande: **07.10.1998**
(21) Numéro de dépôt: 98200953.2
(22) Date de dépôt: 26.03.1998
(51) Int. Cl.: H04M 1/72, H04Q 7/24

(54) **Appareil téléphonique comportant une station de base et au moins un dispositif d'abonné et procédé pour la mise en communication d'un tel appareil**

(30) Priorité: 02.04.1997 FR 9703998
(71) Demandeur: Koninklijke Philips Electronics N.V., 5621 BA Eindhoven (NL)
(72) Inventeur: Vitel, Sandrine, 75008 Paris (FR)
(74) Mandataire: Chaffraix, Jean

(57) **Abrégé**

Cet appareil comporte une station de base (BS) connectée au réseau commuté, au moins un dispositif d'abonné (HS1, HS2...) et au moins un organe de communication (30). Il comporte aussi un ensemble de gestion (20) formé par un ensemble à processeur (29), par une mémoire (26) contenant un programme d'exécution et par une mémoire vive (24) pour contenir, entre autres, des éléments de programmes à exécuter en vue de gérer les liaisons entre le réseau commuté, la station de base, au moins un des dispositifs d'abonnés et au moins un des organes de communication. Chacune des liaisons est assurée par des demi-appels affectés aux circuit demandeur et circuit demandé et par des liens entre ces deux demi-appels.

Application : téléphone répondant à la norme DECT.

## Description

L'invention concerne un appareil téléphonique comportant une station de base connectée au réseau commuté, au moins un dispositif d'abonné et au moins un organe de communication, appareil comportant un ensemble de gestion formé par un ensemble à processeur, par une mémoire contenant un programme d'exécution et par une mémoire vive pour contenir, entre autres, des éléments de programmes à exécuter en vue de gérer les liaisons entre le réseau commuté, la station de base, au moins un des dispositifs d'abonnés et au moins un des organes de communication.

L'invention concerne aussi un procédé mis en oeuvre dans un tel appareil, pour la mise en communication d'un tel appareil.

L'invention trouve des applications importantes dans les systèmes de télécommunication impliquant des protocoles, c est notamment le cas des appareils téléphoniques répondant à la norme DECT, par exemple.

Dans les appareils téléphoniques de ce type, les problèmes de maintenance des programmes qui régissent le fonctionnement de tels appareils deviennent de plus en plus critiques du fait qu'ils doivent pouvoir s'adapter à des exigences diverses. Ainsi, par exemple ces problèmes surviennent lorsque à partir d'un appareil déjà conçu pour assurer la connexion entre un dispositif d'abonné et le réseau, on veut encore assurer une liaison avec un nouvel organe de communication par exemple un répondeur.

Ce genre de problème se retrouve aussi dans les systèmes de type GSM, ou ceux se connectant aux lignes NUMERIS (ISDN dans la littérature anglo-saxonne).

La présente invention propose un appareil du genre mentionné dans le préambule qui permet de faciliter la maintenance de celui-ci de sorte qu'il puisse s'adapter à des liaisons nouvelles sans avoir à modifier trop profondément tous les programmes qui en régissent le fonctionnement.

Pour cela, un tel appareil est remarquable en ce que chacune des liaisons est assurée par des demi-appels affectés aux circuit demandeur et circuit demandé et par des liens entre ces deux demi-appels.

L'idée de l'invention consiste, par ces demi-appels, à définir les éléments qui sont en relation. Il est donc facile en analysant ces demi-appels de savoir ce qui convient à ces éléments, quel signal il faut envoyer, etc..

La description suivante faite en regard des dessins ci-annexés, le tout donné à titre d'exemple non limitatif, fera bien comprendre comment l'invention peut être réalisée.
La figure 1 montre un appareil conforme à l'invention.
La figure 2 montre les couches de protocol définies par la norme DECT.
La figure 3 montre l'implémentation des demi-appels.
La figure 4 montre, sous forme schématique l'établissement et le relâchement, selon l'invention, d'une communication d'un élément faisant partie de l'appareil de la figure 1.

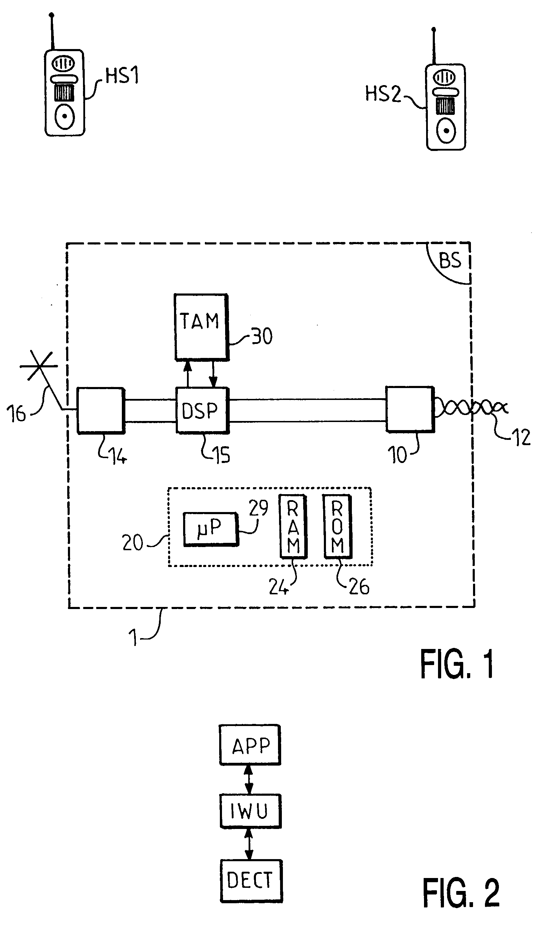

A la figure 1, l'appareil qui est représenté est un appareil répondant aux normes DECT. On trouvera, dans la norme ETSI ETS 300 175-5 part 5 : "Couche réseau", différentes informations concernant ce genre d'appareil. La référence 1 montre le circuit de base BS auquel peuvent être rattachés une pluralité de combinés HS1, HS2, ... par voie radioélectrique. Ce circuit de base 1 comporte, entre autres, un circuit de ligne 10 qui lui permet d'être raccordé au réseau commuté via une ligne téléphonique 12 et un circuit radioélectrique 14 qui autorise le dialogue avec les différents combinés HS1, HS2,..., en émettant et en recevant des ondes par l'intermédiaire d'une antenne 16. Pour traiter toutes les informations de nature analogique qui transitent à l'intérieur du circuit de base, il est prévu un organe de traitement de signal 15 formé autour d'un processeur de signal DSP qui traite les signaux vocaux notamment. Tous les éléments de ce circuit de base sont gérés par un ensemble à microprocesseur 20. Cet organe 15 est composé, notamment, de la façon usuelle, d'une mémoire vive 24, d'une mémoire morte 26 contenant les instructions de fonctionnement de l'appareil et d'un processeur de gestion 29. Cet appareil comporte aussi un dispositif répondeur constitué essentiellement par une mémoire 30 d'un type connu sous le nom de mémoire flash. Cette mémoire est donc destinée à contenir les messages nécessités par la fonction répondeur.

Selon l'invention, pour établir une liaison entre des éléments de l'appareil téléphonique, c'est-à-dire soit une relation entre les combinés soit une relation entre un combiné et la ligne téléphonique 12 et un des combinés, soit encore des relations dans lesquelles participe le dispositif répondeur constitué essentiellement par la mémoire 30, il est prévu d'établir des demi-appels.

Ces demi-appels sont gérés au niveau de la couche IWU montrée à la figure 2. Cette couche IWU se situe à l'interface du protocole DECT tel que défini par la norme précitée et de l'application APP qui est à définir par le constructeur.

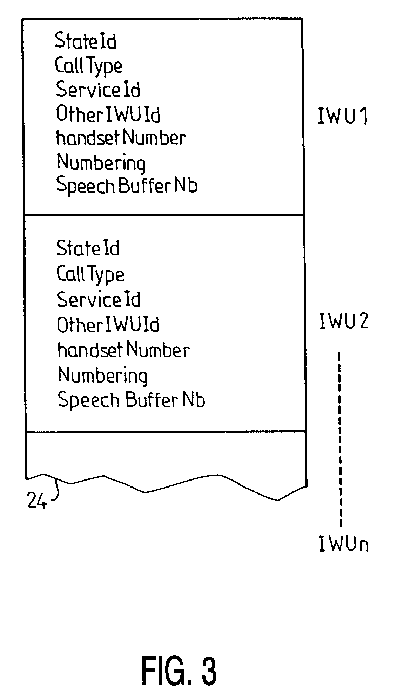

Chaque fois qu'une connexion est demandée, selon l'invention, se créent des objets de demi-appels. La figure 3 montre la structure de ces demi-appels, ceux-ci portent les références IWU1, IWU2,.., IWUn. Ces demi-appels sont un ensemble de variables mémoires qui s'implantent dans la mémoire 24 au fur et à mesure des besoins.

Ces variables portent les noms définis dans le tableau 1 suivant qui donne la signification de ces variables :

**TABLEAU 1**

| |
|---|
| **StateId** : donne l'état dans lequel se trouve le demi-appel : par exemple en attente, connecté, connexion déclenchée etc... |
| **CallType** : nature de l'appel et direction de l'appel. |
| **ServiceId** : nature de la connexion : réseau, station de base, dispositif répondeur, etc... |
| **OtherWUId** : identifie l'autre objet IWU avec lequel l'IWU est relié. |
| **HandsetNumber** : identifie le combiné qui a provoqué la création de l'objet. |
| **Numbering** : numéro formé par le combiné à partir duquel un numéro est composé. |
| **SpeechBufferNb** : capacité de la mémoire tampon à affecter pour le traitement des signaux de parole. |
| Pour chaque partie concernée par un appel, on remplit ce tableau. |

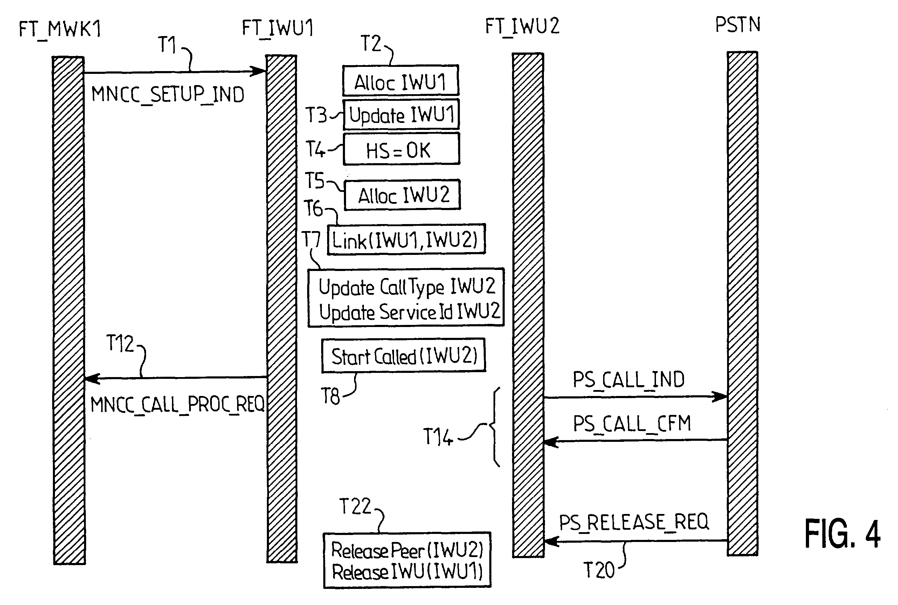

La figure 4 explicite un exemple où les mesures de l'invention sont appliquées. Cet exemple est relatif à une demande provenant d'un combiné (circuit demandeur) pour se raccorder au réseau téléphonique (circuit demandé). Sur cette figure 4, différentes barres verticales hachurées portent les références FT_MWK1, FT_IWU1, FT_IWU2 et PSTN affectées respectivement aux couches DECT, IWU, IWU et APP (cf. figure 2).

On explique le fonctionnement pour le cas où un appel pour le réseau est demandé depuis un combiné. Cet appel se traduit par l'apparition du signal MNCC_SETUP_IND défini dans la norme DECT précitée et indiqué sur la figure 4 par une première tâche portant la référence T1. Selon l'invention, un objet IWU1 est créé par la fonction ALLOC IWU1 (référence T2) et une autre tâche T3 va être de le remplir avec les éléments disponibles. Ceci est effectué par la fonction Update. Différents éléments du tableau IWU1 sont ainsi remplis. On teste ensuite (tâche T4) si le combiné est bien apte à appeler, on admet que cela est autorisé. Alors on crée un autre objet qui se nomme IWU2, (tâche T5). Puis, on va mettre les numéros de liaison entre ces deux objets au moyen de la fonction Link(IWU1, IWU2) ce qui est indiqué à la tâche T6. Par cette fonction Link(), le champ OtherIWUId de chacun des objets IWU1 et IWU2 est complété par les identificateurs de l'un et de l'autre. Ainsi ce champ contiendra IWU2 pour l'objet IWU1 et IWU1 pour l'objet IWU2. On remplit le tableau IWU2 en remplissant les rubrique CallType et ServiceId. Ceci est montré par la tâche T7. Puis l'appel est déclenché (tâche T8). Ceci est ensuite signifié au combiné appelant par le signal MNCC_CALL_PROC_REQ (tâche T12). La liaison est ensuite établie vers le réseau tâche T14 au moyen de signaux PS_CALL_IND et sa réponse d'acquittement PS_CALL_CFM. La liaison peut être interrompue depuis le réseau ce qui provoque l'apparition du signal PS_RELEASE_REQ (tâche T20). Ainsi, ceci libère les objets IWU1 et IWU2 tâche T22.

L'analyse de ces tableaux IWUi permet d'analyser toutes les connexions qui sont en cours et de connaître leur état. Ceci permet donc une gestion facile des liaisons.

## Revendications

1. Appareil téléphonique comportant une station de base connectée au réseau commuté, au moins un dispositif d'abonné et au moins un organe de communication, appareil comportant un ensemble de gestion formé par un ensemble à processeur, par une mémoire contenant un programme d'exécution et par une mémoire vive pour contenir, entre autres, des éléments de programmes à exécuter en vue de gérer les liaisons entre le réseau commuté, la station de base, au moins un des dispositifs d'abonnés et au moins un des organes de communication, caractérisé en ce que chacune des liaisons est assurée par des demi-appels affectés aux circuit demandeur et circuit demandé et par des liens entre ces deux demi-appels.

2. Appareil téléphonique selon la revendication 1, répondant à la norme DECT, caractérisé en ce que les demi-appels sont implémentés dans la couche IWU définie par ladite norme.

3. Appareil téléphonique selon la revendication 1 ou 2, caractérisé en ce que les demi-appels sont constitués essentiellement par des tableaux implémentés dans ladite mémoire formés de variables définissant l'appel et la laison avec au moins un autre demi-appel.

4. Procédé pour la mise en communication afin d'assurer des liaisons dans un appareil selon l'une des revendications 1 à 3.
